# EUROPEAN PATENT APPLICATION

(11) **EP 4 711 748 A1**
(43) Date of publication of application: **18.03.2026**
(21) Application number: 25200326.4
(22) Date of filing: 04.09.2025
(51) Int. Cl.: G01N 21/88, G01N 21/95

(54) **SUBSTRATE IMAGING DEVICE, SUBSTRATE PROCESSING APPARATUS, SUBSTRATE IMAGING METHOD AND SUBSTRATE PROCESSING METHOD**

(30) Priority: 11.09.2024 JP 2024157561
(71) Applicant: SCREEN Holdings Co., Ltd., Kyoto-shi, Kyoto 602-8585 (JP)
(72) Inventor: MIYAMOTO, Shuji, Kyoto 602-8585 (JP)
(74) Representative: Kilian Kilian & Partner mbB

(57) **Abstract**

A substrate imaging device includes an illuminator, an imager and a controller. The illuminator irradiates an upper surface of a substrate held by a substrate holding device with illumination light. The imager captures an image of the upper surface of the substrate irradiated with the illumination light. Based on an output of the imager, inspection image data representing a state of at least a partial area of the upper surface of the substrate is acquired. The inspection image data corresponds to light having a wavelength, with the light being absorbed by the substrate.

## Description

### BACKGROUND

### Technical Field

The present disclosure relates to a substrate imaging device, a substrate processing apparatus, a substrate imaging method and a substrate processing method for capturing an image of a substrate.

### Description of Related Art

In various processing steps for a substrate, the substrate is inspected. For example, in a substrate inspection device described in JP 2018-36235 A, strip-shaped light larger than the diameter of a substrate in one direction is emitted downwardly by a light emitter. In this state, the substrate to be inspected is moved in the other direction orthogonal to the one direction so as to pass below the light emitter. Thus, respective portions of the upper surface of the substrate are sequentially irradiated with the strip-shaped light. The strip-shaped light is sequentially reflected by respective portions of the substrate and is received by a light receiver. Image data representing an image of the entire upper surface of the substrate is generated based on an amount of light received by the light receiver. The substrate is inspected based on the generated image data.

### SUMMARY

In the inspection, it is preferable that the state of the upper surface of the substrate (the presence or absence of a defect, the film thickness distribution of a coating film, the presence or absence of a coating film, or the like) is accurately identified. That is, it is preferable that the image data used for the inspection for the upper surface of the substrate more accurately represents the state of the upper surface of the substrate. However, depending on the type of the substrate to be inspected, appropriate image data corresponding to the inspection for the substrate may not be acquirable.

An object of the present disclosure is to provide a substrate imaging device, a substrate processing apparatus, a substrate imaging method and a substrate processing method that enable appropriate inspection in regard to an upper surface of a substrate according to a type of substrate.

A substrate imaging device according to one aspect of the present disclosure includes an illuminator that emits illumination light to an upper surface of a substrate, an imager that captures an image of the upper surface of the substrate irradiated with the illumination light, and a controller that acquires inspection image data representing a state of at least a partial area of the upper surface of the substrate based on an output of the imager, wherein the inspection image data corresponds to light having an absorption wavelength of the substrate.

A substrate processing apparatus according to another aspect of the present disclosure includes the above-mentioned substrate imaging device, and an inspector that inspects a state of an upper surface of a substrate based on inspection image data acquired by the substrate imaging device.

A substrate imaging method according to yet another aspect of the present disclosure includes irradiating an upper surface of a substrate with illumination light, capturing, using an imager, an image of the upper surface of the substrate irradiated with the illumination light, and based on an output of the imager, acquiring inspection image data representing a state of at least a partial area of the upper surface of the substrate, wherein the inspection image data corresponds to light having an absorption wavelength of the substrate.

A substrate processing method according to yet another aspect of the present disclosure includes the above-mentioned substrate imaging method, and inspecting a state of an upper surface of a substrate based on inspection image data acquired by the substrate imaging method.

With the present disclosure, it is possible to perform appropriate inspection in regard to an upper surface of a substrate in accordance with a type of the substrate.

Other features, elements, characteristics, and advantages of the present disclosure will become more apparent from the following description of preferred embodiments of the present disclosure with reference to the attached drawings.

### BRIEF DESCRIPTION OF THE DRAWING

Fig. 1 is an external perspective view of a substrate inspection device according to one embodiment of the present disclosure;
Fig. 2 is a schematic side view showing the inner configuration of the substrate inspection device of Fig. 1;
Fig. 3 is a plan view of a silicon carbide substrate held by a rotation holder as viewed from above;
Fig. 4 is a diagram showing the traveling state of white light for each wavelength, with the white light being emitted by an illuminator to a substrate and guided to an imager of Fig. 1 at a time of imaging for the silicon carbide substrate;
Fig. 5 is a diagram showing one example of an R image obtained by imaging for the silicon carbide substrate;
Fig. 6 is a diagram showing one example of a G image obtained by imaging for the silicon carbide substrate;
Fig. 7 is a diagram showing one example of a B image obtained by imaging for the silicon carbide substrate;
Fig. 8 is a block diagram showing the functional configuration of a controller of Fig. 1;
Fig. 9 is a flowchart showing an imaging inspection process executed by the controller of Fig. 8;
Fig. 10 is a flowchart showing the imaging inspection process executed by the controller of Fig. 8;
Fig. 11 is a flowchart showing one example of an inspection process in the step S16 of Fig. 9; and
Fig. 12 is a schematic block diagram showing one example of a substrate processing apparatus including a substrate inspection device of Fig. 1.

### DETAILED DESCRIPTION

A substrate imaging device, a substrate processing apparatus, a substrate imaging method and a substrate processing method according to one embodiment of the present disclosure will be described below with reference to the drawings. In the following description, a substrate refers to a substrate for an FPD (Flat Panel Display) that is used for a liquid crystal display device, an organic EL (Electro Luminescence) display device or the like, a semiconductor substrate, a substrate for an optical disc, a substrate for a magnetic disc, a substrate for a magneto-optical disc, a substrate for a photomask, a ceramic substrate, a substrate for a solar cell or the like.

In the present embodiment, the substrate has a circular shape except for the portion where an orientation flat or a notch is formed in plan view. In the following description, a cutout for checking a direction such as an orientation flat, a notch and the like formed in the substrate are collectively and simply referred to as a cutout.

Further, the substrate has a front surface that is a circuit forming surface and a back surface that is opposite to the circuit forming surface. In the following description, regardless of the front surface and the back surface of the substrate, the surface facing upwardly out of two surfaces of the substrate is referred to as an upper surface of the substrate, and the surface facing downwardly out of the two surfaces of the substrate is referred to as a lower surface of the substrate.

### 1. Configuration of Substrate Inspection Device

The substrate imaging device according to the present embodiment is incorporated in a substrate inspection device for inspecting a state of the upper surface of the substrate. The substrate inspection device will be described.

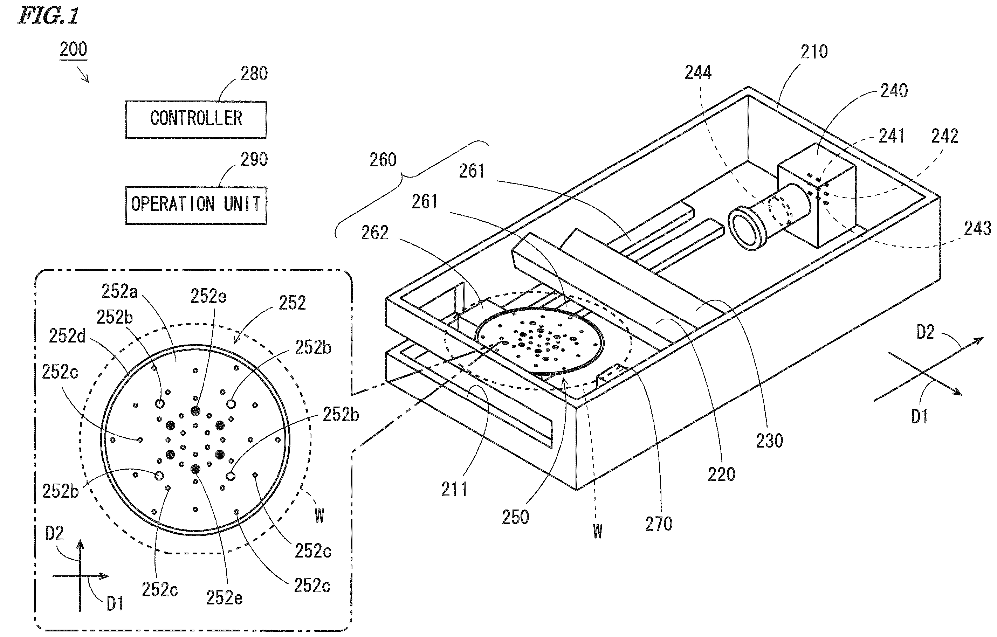

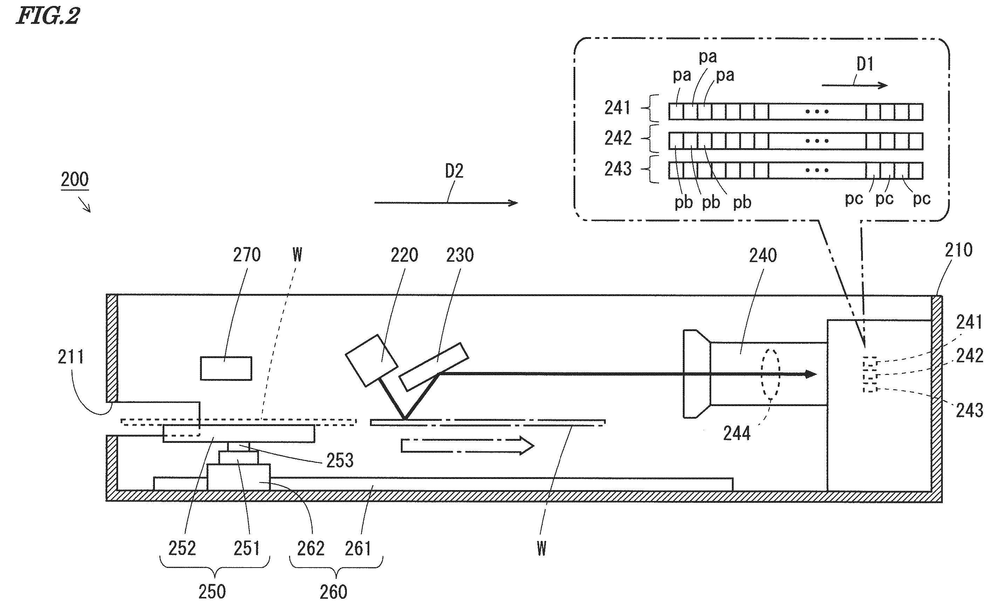

Fig. 1 is an external perspective view of a substrate inspection device according to one embodiment of the present disclosure. Fig. 2 is a schematic side view showing the inner configuration of the substrate inspection device 200 of Fig. 1. As shown in Fig. 1, the substrate inspection device 200 includes a casing 210, an illuminator 220, a reflector 230, an imager 240, a substrate holding device 250, a mover 260, a direction detector 270, a controller 280 and an operation unit 290.

The casing 210 has a rectangular box shape extending in one direction. In a side portion of the casing 210, a slit-shaped opening 211 through which the substrate W is to be carried in and out is formed. The illuminator 220, the reflector 230, the imager 240, the substrate holding device 250, the mover 260, and the direction detector 270 are accommodated in the casing 210.

The illuminator 220 according to the present embodiment includes one or a plurality of light sources (white light sources) that generates white light, and is formed to extend in a direction orthogonal to a longitudinal direction of the casing 210 in a horizontal plane.

Further, the illuminator 220 is provided at a substantially center portion in the casing 210 and obliquely downwardly emits strip-shaped light larger than a diameter of the substrate W. In the following description, the direction in which the illuminator 220 extends in a horizontal plane in the substrate inspection device 200 (a transverse direction of the casing 210) is referred to as a first device direction D1. Further, the direction orthogonal to the first device direction D1 in a horizontal plane (a longitudinal direction of the casing 210) is referred to as a second device direction D2.

White light emitted by the illuminator 220 of the present example includes light having a wavelength range for red (a wavelength component for red), light having a wavelength range for green (a wavelength component for green) and light having a wavelength range for blue (a wavelength component for blue). In the present embodiment, suppose that the wavelength range for red light is 650 nm and a wavelength range around 650 nm (about 600 nm to 700 nm). Suppose that the wavelength range for green light is 550 nm and a wavelength range around 550 nm (about 500 nm to 580 nm). Suppose that the wavelength range for blue light is 450 nm and a wavelength range around 450 nm (about 400 nm to 490 nm).

The reflector 230 includes an elongated mirror, for example, and is adjacent to the illuminator 220 in the second device direction D2. Further, the reflector 230 is provided at a substantially center portion in the casing 210 so as to extend in parallel to the first device direction D1 and directed obliquely downwardly.

The imager 240 is provided so as to be opposite to the mirror of the reflector 230 in a horizontal plane. The imager 240 includes three imaging elements (241, 242, 243) and one or a plurality of condenser lenses 244.

Each of the three imaging elements (241, 242, 243) is a CCD (Charge-Coupled Device) line sensor or a CMOS (Complementary Metal-Oxide Semiconductor) line sensor, for example. In the following description, when the three line sensors included in the imager 240 are distinguished from one another, these line sensors are suitably referred to as a first line sensor 241, a second line sensor 242 and a third line sensor 243.

In Fig. 2, the front view of the first line sensor 241, the second line sensor 242 and the third line sensor 243 as viewed in the second device direction D2 is shown in the balloon of the two-dot and dash line. As shown in the balloon of Fig. 2, the first line sensor 241 has the configuration in which a plurality of R pixels pa corresponding to red light are arranged on one line. The second line sensor 242 has the configuration in which a plurality of G pixels pb corresponding to green light are arranged on one line. The third line sensor 243 has the configuration in which a plurality of B pixels pc corresponding to blue light are arranged on one line.

With the imager 240 provided in the casing 210, each of the first line sensor 241, the second line sensor 242 and the third line sensor 243 is arranged in an upward-and-downward direction and extend in parallel to the first device direction D1. Thus, the imager 240 has a linear imaging area extending in parallel to the first device direction D1.

As described above, the imager 240 includes the one or plurality of condenser lenses 244. In Figs. 1 and 2, one condenser lens 244 is shown. The depth of focus of the imager 240 is adjusted by the one or plurality of condenser lenses 244 so as to match the length of the traveling path of light from the surface of the substrate W to the three imaging elements (241, 242, 243) through the reflector 230 when an image of the substrate W is captured as described below.

The substrate holding device 250 is a spin chuck, for example, and includes a driving device 251 and a rotation holder 252. The driving device 251 is an electric motor, for example, and has a rotation shaft 253. The rotation holder 252 is attached to the tip of the rotation shaft 253 of the driving device 251, and sucks and holds the lower-surface center area of the substrate W to be inspected. Further, the rotation holder 252 is driven to be rotated about a vertical axis while holding the substrate W by suction.

In Fig. 1, a plan view of the rotation holder 252 is shown in the balloon of the two dot and dash line. The rotation holder 252 according to the present embodiment is formed of a resin, for example, and has a substantially disc shape as shown in the balloon of Fig. 1. The diameter of the rotation holder 252 is smaller than the diameter of the substrate W. Therefore, when the rotation holder 252 holds the substrate W by suction, the peripheral portion of the substrate W does not overlap with the rotation holder 252 in plan view.

The rotation holder 252 has a flat portion 252a that is exposed upwardly while not holding the substrate W. The flat portion 252a is a circular flat surface that constitutes the upper surface of the rotation holder 252.

In the flat portion 252a, a plurality (four in the present example) of suction holes 252b are formed in a dispersed manner. A suction system (not shown) is connected to the plurality of suction holes 252b. Further, in the flat portion 252a, a plurality of projections 252c projecting upwardly are formed in a dispersed manner. Further, in the flat portion 252a, an annular sealing projection 252d that extends along the outer periphery of the rotation holder 252 and projecting upwardly is formed.

In the substantially center portion of the flat portion 252a, head portions of a plurality (six in the present example) of screw members 252e are exposed. The plurality (six in the present example) of screw members 252e are members for attachment of the rotation holder 252 to the rotation shaft 253 of Fig. 2.

When the substrate W is held by suction by the rotation holder 252, the substrate W is first placed on the rotation holder 252. At this time, the plurality of projections 252c and the sealing projection 252d comes into contact with the lower surface of the substrate W, and the substrate W is supported. Further, a closed space is formed between the lower surface of the substrate W and the flat portion 252a of the rotation holder 252. In this state, an atmosphere in the closed space is sucked through the plurality of suction holes 252b. Thus, the substrate W is held by suction on the rotation holder 252.

The mover 260 includes a pair of guide members 261 and a movement holder 262. As shown in Fig. 1, the pair of guide members 261 are provided so as to be arranged in the first device direction D1 and extend in the second device direction D2. As shown in Fig. 2, the movement holder 262 is configured to be movable in the second device direction D2 and its opposite direction along the pair of guide members 261 while holding the substrate holding device 250. The movement holder 262 moves with the substrate holding device 250 holding the substrate W, so that the substrate W passes below the illuminator 220 and the reflector 230. Thus, the linear imaging area of the imager 240 passes through the one surface of the substrate W.

The direction detector 270 is a reflective photoelectric sensor including a light emitting element and a light receiving element, for example, and emits light to the outer periphery of the substrate W and receives reflected light from the substrate W with the substrate W rotated by the substrate holding device 250. The direction detector 270 detects a cutout of the substrate W based on an amount of received light reflected from the substrate W. A transmission-type photoelectric sensor may be used as the direction detector 270.

The controller 280 (Fig. 1) includes a CPU (Central Processing Unit) and a memory, or a microcomputer, for example, and controls the illuminator 220, the imager 240, the substrate holding device 250, the mover 260 and the direction detector 270. Details of the controller 280 will be described below.

The operation unit 290 (Fig. 1) includes a keyboard and a pointing device, for example, and is configured to be operable by a user. Before inspection for one substrate W, the user can input the type of the one substrate W by operating the operation unit 290. In addition, the user can set various work conditions, various inspection conditions and the like of the substrate inspection device 200 by operating the operation unit 290.

### 2. Imaging for Substrate W by Substrate Inspection Device 200

An operation of capturing an image of the substrate W in the substrate inspection device 200 will be described. The substrate W to be inspected is carried into the casing 210 through the opening 211 of Fig. 1 and is held by the substrate holding device 250.

Subsequently, light is emitted by the direction detector 270 to the peripheral portion of the substrate W while the substrate W is rotated by the substrate holding device 250, and reflected light is received by the direction detector 270. Thus, a cutout of the substrate W is detected, and an orientation of the substrate W is determined. Based on the determination result, the rotation position of the substrate W is adjusted such that the cutout of the substrate W is oriented in a predetermined direction.

Next, the illuminator 220 obliquely downwardly emits the strip-shaped light. In this state, the substrate W is moved in the second device direction D2 by the mover 260 such that the substrate W passes below the illuminator 220. The emission range of light emitted by the illuminator 220 in the first device direction D1 is larger than the diameter of the substrate W. Thus, a plurality of portions on the one surface of the substrate W are sequentially irradiated with light emitted by the illuminator 220. The light reflected from the substrate W is further reflected by the reflector 230 and guided to the imager 240.

Each of the three imaging elements (241, 242, 243) of the imager 240 receives the light reflected from the one surface of the substrate W in a predetermined sampling period, thereby sequentially capturing images of the plurality of portions on the one surface of the substrate W.

At this time, each of the plurality of R pixels pa forming the first line sensor 241 receives light having the wavelength range for red and outputs pixel data representing a value corresponding to an amount of received light. Further, each of the plurality of R pixels pb forming the second line sensor 242 receives light having the wavelength range for green and outputs pixel data representing a value corresponding to an amount of received light. Further, each of the plurality of B pixels pc forming the third line sensor 243 receives light having the wavelength range for blue and outputs pixel data representing a value corresponding to an amount of received light.

Hereinafter, the pixel data output from the R pixels pa is referred to as R pixel data, the pixel data output from the G pixel pb is referred to as G pixel data, and the pixel data output from the B pixel pc is referred to as B pixel data.

Based on a plurality of R pixel data pieces output from the imager 240, image data representing the entire image on the one surface of the substrate W is generated. Further, based on a plurality of G pixel data pieces, image data representing the entire image on the one surface of the substrate W is generated. Further, based on a plurality of B pixel data pieces, image data representing the entire image on the one surface of the substrate W is generated.

Hereinafter, image data generated based on the R pixel data is referred to as R image data, and an image represented by the R image data is referred to as an R image. Further, image data generated based on the G pixel data is referred to as G image data, and an image represented by the G image data is referred to as a G image. Further, image data generated based on the B pixel data is referred to as B image data, and an image represented by the B image data is referred to as a B image. In the following description, in a case in which it is not necessary to distinguish the R image data, the G image data and the B image data from one another, the R image data, the G image data and the B image data are simply referred to as image data pieces.

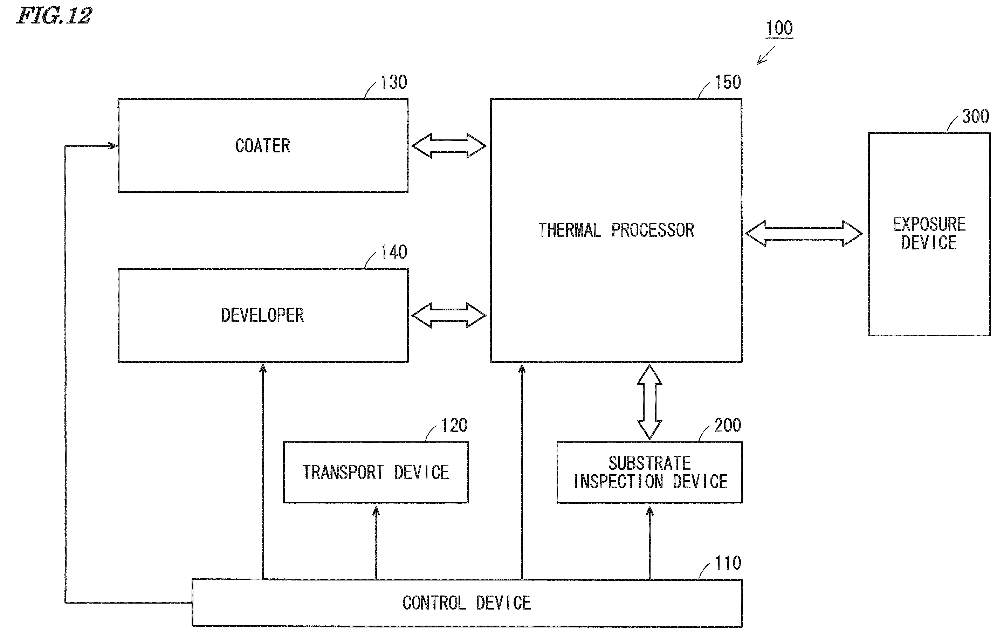

The substrate W is inspected, as described below, using at least one of the R image data, the G image data and the B image data generated as described above. Thereafter, the substrate W is returned to a predetermined position by the mover 260, and the substrate W is carried out of the casing 210 through the opening 211 by a transport device 120 of Fig. 12, described below.

Here, each of the R image data, the G image data and the B image data includes a plurality of pixel values respectively indicating images at a plurality of positions on the upper surface of the substrate W. An amount of light emitted to the substrate W by the illuminator 220 is set such that the maximum value of a plurality of pixel values indicating the substrate center portion of the generated R image, the generated G image and the generated B image is close to a predetermined target pixel value. An amount of light may be set based on an experiment or simulation, for example.

### 3. Inspection for Substrate W

In the above-mentioned substrate inspection device 200, at least one of R image data, G image data and B image data generated by imaging for the substrate W is acquired as inspection image data in accordance with a predetermined acquisition method. Then, based on the acquired inspection image data, a plurality of types of inspections can be executed.

### (1) First Inspection

First inspection that is executable by the substrate inspection device 200 will be described. In the present example, on a substrate W to be inspected, a coating film such as a resist film is formed. In the first inspection, it is determined whether the coating film formed on the substrate W has a defect.

The first inspection is basically executed as follows. First, image data representing the upper surface of a sample substrate having no defect and corresponding to inspection image data is prepared as sample image data. The sample image data may be generated by imaging for the upper surface of the sample substrate using the substrate inspection device 200 or simulation of imaging for the sample substrate. Thereafter, an image of the upper surface of the substrate W to be inspected is captured, and inspection image data of the substrate W to be inspected is acquired.

Subsequently, the presence or absence of a defect in the substrate W to be inspected is determined based on the comparison between a value of each pixel of the sample image data and a value of each pixel of the inspection image data of the substrate W to be inspected. More specifically, the differences between the pixel value of a pixel of the sample image data and the pixel value of a corresponding pixel of the inspection image data are calculated, and image data including a plurality of calculated difference values is generated as difference image data. Then, in a case in which the difference value corresponding to each pixel of the difference image data is in a predetermined allowable range, it is determined that the substrate W to be inspected is normal. That is, it is determined that the substrate W has no defect. On the other hand, in a case in which the difference value corresponding to each pixel of the difference image data is not in the predetermined allowable range, it is determined that the substrate W to be inspected is abnormal. That is, it is determined that the substrate W has a defect.

### (2) Second Inspection

Second inspection that is executable by the substrate inspection device 200 will be described. In the present example, on a substrate W to be inspected, a coating film such as a resist film is formed. In the second inspection, it is determined whether the coating film formed on the substrate W has unevenness, that is, whether distribution of thickness of the coating film is in an allowable range.

The second inspection is basically executed as follows. First, an image of the upper surface of a substrate W to be inspected is captured, and inspection image data in regard to the substrate W to be inspected is acquired. Next, it is determined whether, in an image represented by the inspection image data, there is a portion where a pixel value greatly changes in the area from the center of the substrate W to the outer peripheral end of the substrate W at a rate exceeding a predetermined threshold value. Then, in a case in which there is a portion where a pixel value greatly changes, it is determined that the substrate W has unevenness. On the other hand, in a case in which there is no portion where a pixel value greatly changes, it is determined that the substrate W has no unevenness.

### (3) Third Inspection

Third inspection that is executable by the substrate inspection device 200 will be described. On a substrate W that has undergone the step of forming a coating film, the coating film is to be formed essentially. However, in a step of manufacturing the substrate W, due to a human work error or the like, a substrate W on which a coating film is not formed is erroneously treated as a substrate W on which a coating film is formed. In the present example, on a substrate W to be inspected, a coating film such as a resist film is to be formed. In the third inspection, it is determined whether a coating film is formed on the substrate W.

The third inspection is basically executed as follows. First, an image of the upper surface of a substrate W to be inspected is captured, and inspection image data in regard to the substrate W to be inspected is acquired. Next, it is determined whether brightness of the entire image represented by the inspection image data is in a predetermined range. In this case, the brightness of the entire image may be indicated by the total value of the pixel values of all of the pixels of the image or may be indicated by the average value of the pixel values of all of the pixels of the image. Alternatively, the maximum value, the minimum value or the average value of a plurality of pixels in the center portion of the image may be set as the brightness of the entire image.

Then, in a case in which the brightness of the entire image represented by the inspection image data is in the predetermined range, it is determined that a coating film is formed on the substrate W to be inspected. On the other hand, in a case in which the brightness of the entire image represented by the inspection image data is not in the predetermined range, it is determined that a coating film is not formed on the substrate W to be inspected.

### 4. Inspection Image Data

The type of a substrate W to be inspected includes a substrate W made of silicon and a substrate W made of silicon carbide. Hereinafter, the substrate W made of silicon is suitably referred to as a silicon substrate, and the substrate W made of silicon carbide is suitably referred to as a silicon carbide substrate.

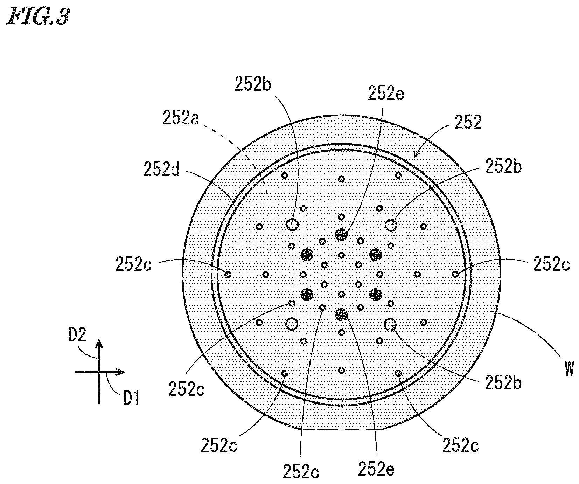

Fig. 3 is a plan view of a silicon carbide substrate held by the rotation holder 252 as viewed from above. The silicon carbide substrate is an orange translucent substrate. Therefore, when the silicon carbide substrate held by the rotation holder 252 is viewed from above, it is found that the rotation holder 252 is present in the lower-surface center area of the silicon carbide substrate as shown in Fig. 3. In Fig. 3, the dotted pattern is applied to the silicon carbide substrate, so that it is shown that the silicon carbide substrate is viewed as an orange translucent substrate. In the present embodiment, a translucent substrate refers to a substrate having a transmittance of white light of approximately 20% or more and 100% or less, for example. Further, an opaque substrate, described below, refers to a substrate having a transmittance of white light of approximately 0% or more and less than 20%, for example.

As described above, in a case in which being a translucent substrate having a specific color, the substrate W is likely to absorb light of a color complementary to the specific color. Therefore, in the substrate inspection device 200, when an image of the silicon carbide substrate is captured, part of white light which is emitted by the illuminator 220 to the substrate W and travels into the silicon carbide substrate is absorbed by the silicon carbide substrate.

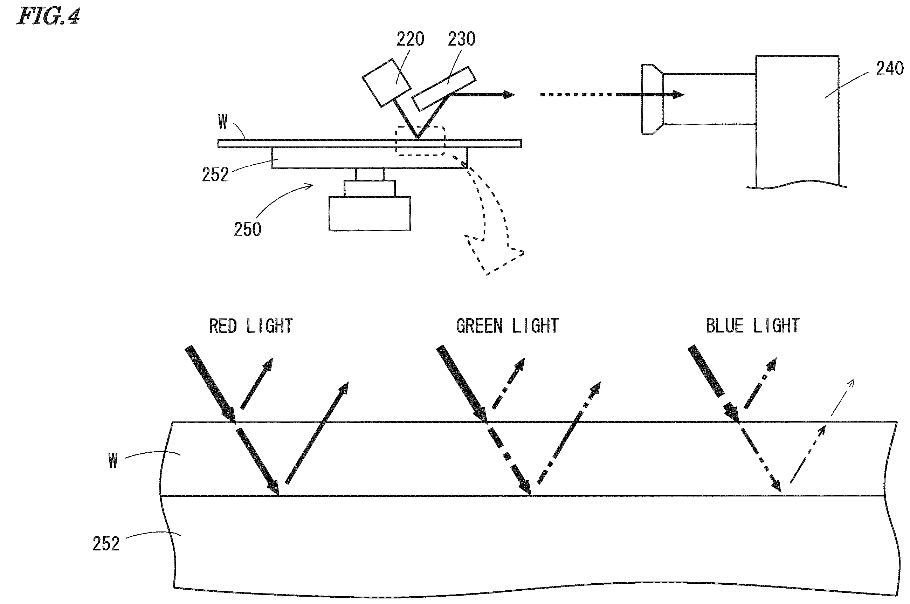

Fig. 4 is a diagram showing the traveling state of white light for each wavelength, with the white light being emitted by the illuminator 220 to the substrate W and guided to the imager 240 of Fig. 1 when an image of the silicon carbide substrate is captured. As shown in the upper field of Fig. 4, when an image of the silicon carbide substrate is captured, the upper surface of the silicon carbide substrate held by the substrate holding device 250 is irradiated with white light emitted by the illuminator 220. As described above, the white light according to the present embodiment includes light having a wavelength range for red (a wavelength component for red), light having a wavelength range for green (a wavelength component for green) and light having a wavelength range for blue (a wavelength component for blue).

In this case, as indicated by the solid arrow in the lower left field of Fig. 4, part of red light is reflected from the upper surface of the silicon carbide substrate and guided to the imager 240. The remaining red light travels inside of the silicon carbide substrate, is reflected from the upper surface of the rotation holder 252, travels inside the silicon carbide substrate again, and is guided to the imager 240. Here, red is not a color complementary to the color (orange) of the silicon carbide substrate. Therefore, the red light is hardly absorbed by the silicon carbide substrate while traveling inside the silicon carbide substrate.

As indicated by the one-dot and dash arrow in the lower center field of Fig. 4, part of green light is reflected from the upper surface of the silicon carbide substrate and guided to the reflector 230. The remaining green light travels inside the silicon carbide substrate, is reflected from the upper surface of the rotation holder 252, travels inside the silicon carbide substrate again, and is guided to the imager 240. Here, similarly to red, green is not a color complementary to the color (orange) of the silicon carbide substrate. Therefore, the green light is hardly absorbed by the silicon carbide substrate while traveling inside the silicon carbide substrate.

As indicated by the two-dot and dash arrow in the lower right field of Fig. 4, part of blue light is reflected from the upper surface of the silicon carbide substrate and guided to the reflector 230. The remaining blue light travels inside the silicon carbide substrate, is reflected from the upper surface of the rotation holder 252, travels inside the silicon carbide substrate again, and is guided to the reflector 230. Here, blue is a color complementary to the color (orange) of the silicon carbide substrate. Therefore, large part of the blue light traveling inside the silicon carbide substrate is absorbed by the silicon carbide substrate. In this case, light having the wavelength range for blue and being reflected from the upper surface of the rotation holder 252 is hardly incident on the imager 240.

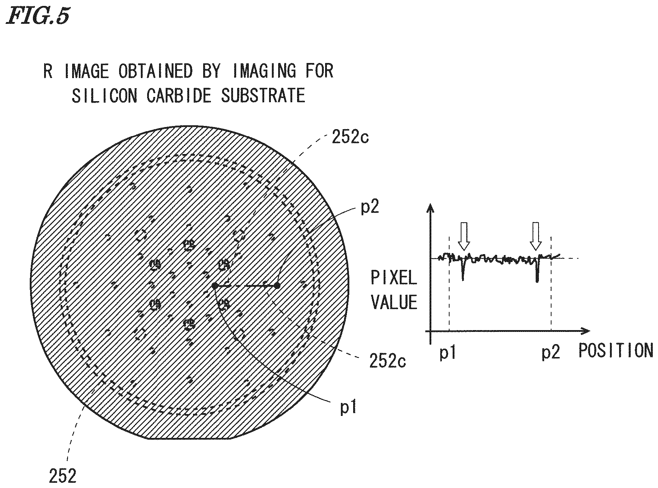

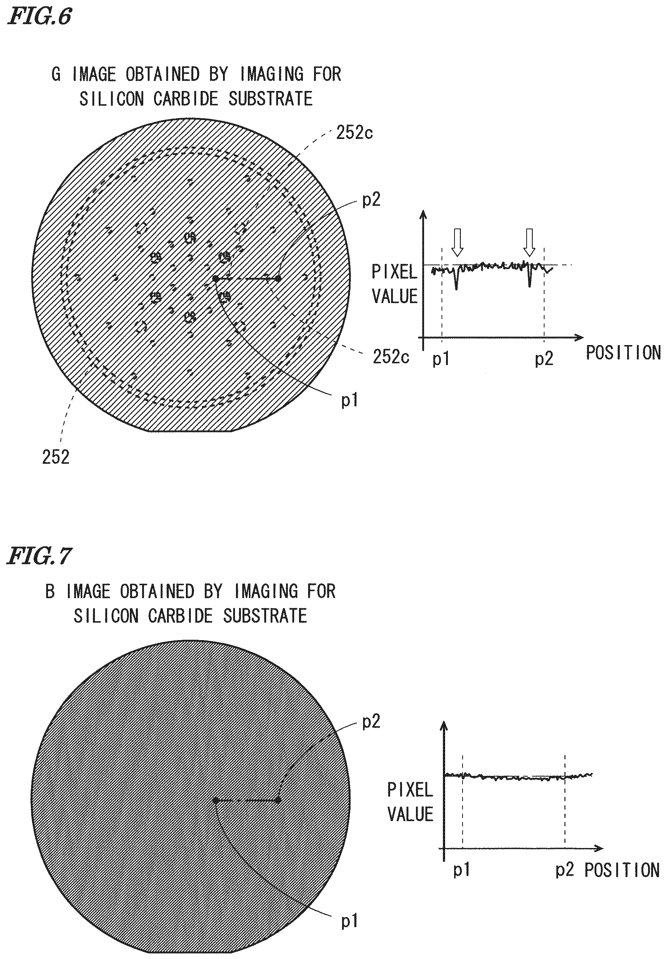

Fig. 5 is a diagram showing one example of an R image by imaging for the silicon carbide substrate. Fig. 6 is a diagram showing one example of a G image obtained by imaging for the silicon carbide substrate. Fig. 7 is a diagram showing one example of a B image obtained by imaging for the silicon carbide substrate. In Figs. 5 to 7, the images (R image, G image and B image) of the silicon carbide substrate are shown in the left fields. Further, in each right field, pixel values corresponding to a plurality of portions on the straight line connecting two points p1 and p2 defined on the upper surface of the silicon-carbide substrate are shown by the graph. In the graph in the right field of each of Figs. 5 to 7, the ordinate indicates a pixel value, and the abscissa indicates the position between the points p1 and p2 on the silicon-carbide substrate.

As shown in each of Figs. 5 and 6, in addition to the image of the upper surface of the silicon-carbide substrate, each of the R image and the G image includes an image showing the upper surface of the rotation holder 252 (an image of the projections 252c, typically). In this manner, the reason why each of the R image and the G image includes the image of the rotation holder 252 is that each of the red light and the green light reflected from the rotation holder 252 is incident on the imager 240 without being absorbed by the silicon carbide substrate. Further, the reason why each of the R image and the G image includes the image of the rotation holder 252 is also because the depth of focus of the imager 240 includes the area of the upper surface of the rotation holder 252. In the graph in the right field of each of Figs. 5 and 6, portions in which a pixel value changes and which correspond to the projection 252c of the rotation holder 252 are indicated by the white arrows. The portion in which a pixel value changes and which represents the shape of the upper surface of the rotation holder 252 causes an inspection failure such as erroneous determination of a defect.

On the other hand, as shown in Fig. 7, the B image includes only an image of the upper surface of the silicon carbide substrate, and does not include an image showing the upper surface of the rotation holder 252. In this manner, the reason why the B image does not include an image of the rotation holder 252 is that the blue light entering the silicon carbide substrate is absorbed by the silicon carbide substrate. Unlike the examples of Figs. 5 and 6, the graph in the right field of Fig. 7 does not show a change of the pixel value corresponding to the projection 252c of the rotation holder 252.

As a result, it is found that, when the R image data and the G image data are used in inspection for the silicon carbide substrate, an image of the rotation holder 252 functions as noise, and accurate inspection cannot be executed. As such, in the substrate inspection device 200 according to the present embodiment, when the silicon carbide substrate is inspected, only the B image data is acquired as inspection image data.

In contrast to a silicon carbide substrate, a silicon substrate is not transparent. The front surface and the back surface of the silicon substrate substantially totally reflect white light generated by the illuminator 220. Therefore, R image data, G image data and B image data obtained by imaging for the silicon substrate do not include the component of an image of the rotation holder 252. Therefore, in the substrate inspection device 200 according to the present embodiment, when the silicon substrate is inspected, all of the three image data pieces of R image data, G image data and B image data are acquired as inspection image data pieces.

### 5. Functional Configuration of Controller 280 of Substrate Inspection Device 200

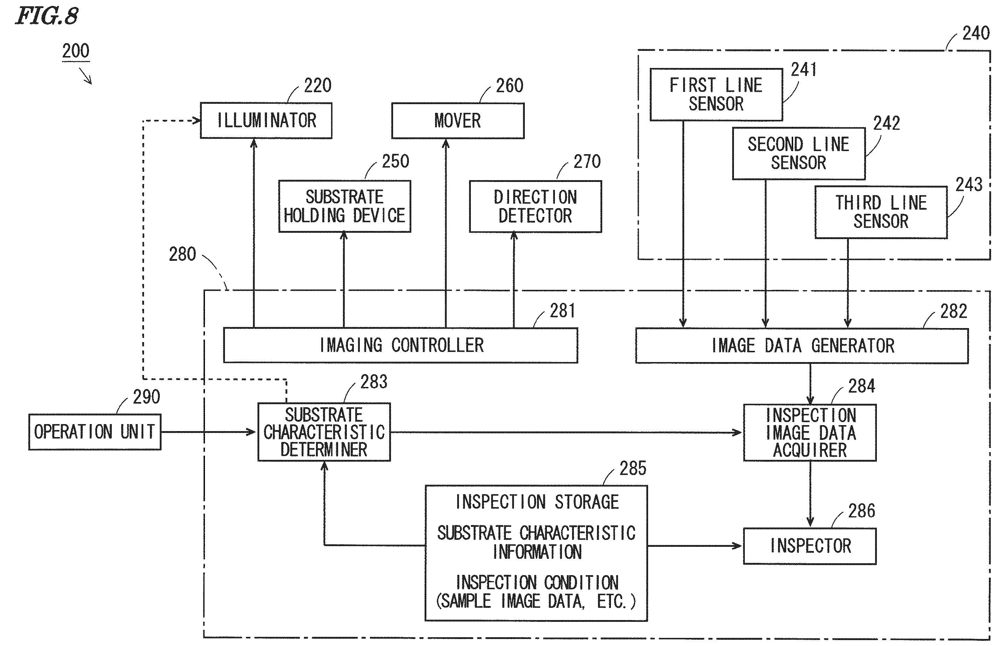

Fig. 8 is a block diagram showing the functional configuration of the controller 280 of Fig. 1. As shown in Fig. 8, the controller 280 includes an imaging controller 281, an image data generator 282, a substrate characteristic determiner 283, an inspection image data acquirer 284, an inspection storage 285 and an inspector 286 as functions for imaging and inspection for the substrate W. These functions are implemented by execution by the CPU of a computer program (a program for executing an imaging inspection process, described below) stored in the memory or the like. The configuration of part or all of the functions of the controller 280 may be realized by hardware such as an electronic circuit.

The imaging controller 281 controls the illuminator 220, the imager 240, the substrate holding device 250, the mover 260 and the direction detector 270 such that an image of the substrate W that has been carried into the casing 210 (Fig. 1) is captured. In this case, the first line sensor 241, the second line sensor 242 and the third line sensor 243 of the imager 240 respectively sequentially output R pixel data, G pixel data and B pixel data obtained by imaging to the controller 280.

When an image of the substrate W is captured by the imager 240, the image data generator 282 generates R image data based on the R pixel data output by the imager 240. Further, the image data generator 282 generates G image data based on the G pixel data output from the imager 240. Further, the image data generator 282 generates B image data based on the B pixel data output from the imager 240.

The inspection storage 285 stores substrate characteristic information, an inspection condition and the like. The substrate characteristic information includes information representing a method of acquiring inspection image data corresponding to the characteristic of the substrate W to be inspected.

Here, a substrate W which is a translucent substrate and has the characteristic of easily absorbing blue light as compared with red light and green light is referred to as a B absorption substrate, and a substrate W which is a translucent substrate and has the characteristic of easily absorbing green light as compared with red light and blue light is referred to as a G absorption substrate. Further, a substrate W which is a translucent substrate and has the characteristic of easily absorbing red light as compared with green light and blue light is referred to as an R absorption substrate, and a substrate W which is opaque and does not transmit white light is referred to as an opaque substrate.

In this case, the above-mentioned substrate characteristic information specifically includes the information that "B image data is acquired as inspection image data in a case in which the substrate W to be inspected is a B absorption substrate." Further, the substrate characteristic information includes the information that "G image data is acquired as inspection image data in a case in which the substrate W to be inspected is a G absorption substrate." Further, the substrate characteristic information includes the information that "R image data is acquired as inspection image data in a case in which the substrate W to be inspected is an R absorption substrate." Further, the substrate characteristic information includes the information that "R image data, G image data and B image data are respectively acquired as inspection image data pieces in a case in which the substrate W to be inspected is an opaque substrate."

An inspection condition includes the information required for inspection for the substrate W using the inspection image data. For example, in a case in which the above-mentioned first inspection is executed, an inspection condition includes an allowable range for each difference value in regard to sample image data and difference image data. Further, in a case in which the above-mentioned second inspection is executed, an inspection condition includes a threshold value for determining a change amount of a pixel value in inspection image data. Further, in a case in which the above-mentioned third inspection is executed, an inspection condition includes a predetermined range for determining the brightness of an image represented by inspection image data.

In the substrate inspection device 200, as described above, before inspection for one substrate, the information representing the type of the one substrate W is input based on an operation of the operation unit 290 made by the user. The substrate characteristic determiner 283 receives the type of the substrate W received from the operation unit 290. Then, the substrate characteristic determiner 283 determines whether the substrate W of the received type is one of a B absorption substrate, a G absorption substrate, an R absorption substrate and an opaque substrate.

This determination process can be realized when the substrate characteristic determiner 283 holds a table of known information representing which one of a B absorption substrate, a G absorption substrate, an R absorption substrate and an opaque substrate each of a plurality of types of substrates W corresponds to. This table includes the information that "the substrate W made of silicon carbide is a B absorption substrate" and the information that "the substrate W made of silicon is an opaque substrate," for example. The above-mentioned table may be stored in the inspection storage 285 instead of being held by the substrate characteristic determiner 283.

Further, based on the above-mentioned determination result and the substrate characteristic information stored in the inspection storage 285, the substrate characteristic determiner 283 determines a method of acquiring inspection image data during imaging for one substrate W.

The inspection image data acquirer 284 receives R image data, G image data and B image data from the image data generator 282 during image for one substrate W. Further, the inspection image data acquirer 284 acquires inspection image data based on the received R image data, the received G image data and the received B image data in accordance with the method of acquiring the inspection image data determined by the substrate characteristic determiner 283.

The inspector 286 inspects the substrate W based on an inspection condition stored in the inspection storage 285 and the inspection image data acquired by the inspection image data acquirer 284. Further, the inspector 286 outputs an inspection result to an external device of the substrate inspection device 200, for example. The configuration of the substrate inspection device 200 of Figs. 1 and 8 excluding the inspector 286 of Fig. 8 is an example of the substrate imaging device.

### 6. Imaging Inspection Process

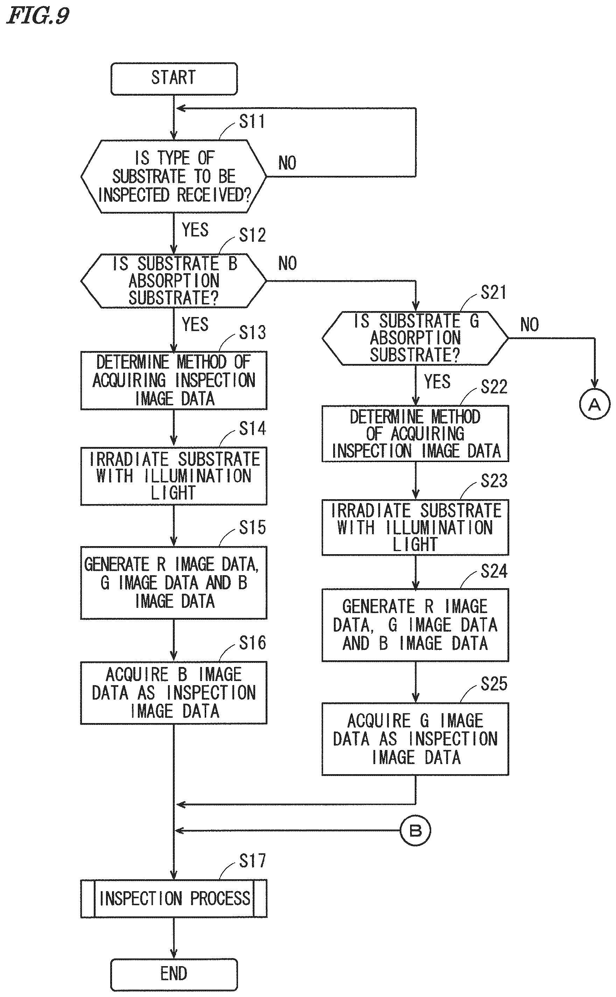

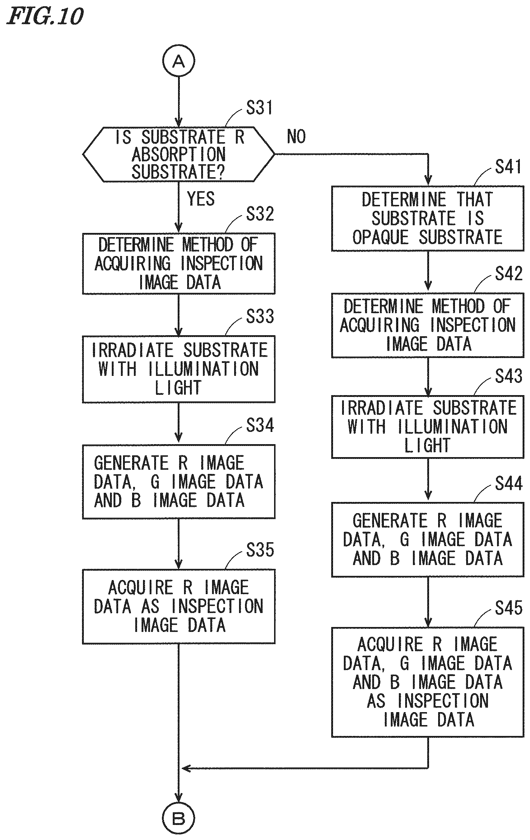

Figs. 9 and 10 are flowcharts showing an imaging inspection process executed by the controller 280 of Fig. 8. The imaging inspection process will be described below with reference to Fig. 8. The imaging inspection process is started when the substrate inspection device 200 is powered on or when the user provides an instruction for starting inspection to the controller 280 using the operation unit 290, for example.

First, the substrate characteristic determiner 283 determines whether a type of the substrate W to be inspected has been received (step S11). In a case in which a type of the substrate W is not received, the substrate characteristic determiner 283 repeats the process of the step S11. On the other hand, when a type of the substrate W is received, the substrate characteristic determiner 283 accepts the received information (the type of the substrate W) and determines whether the substrate W to be inspected is a B absorption substrate (step S12).

In a case in which the substrate W to be inspected is a B absorption substrate in the step S12, the substrate characteristic determiner 283 determines a method of acquiring inspection image data based on substrate characteristic information stored in the inspection storage 285 (step S13). In the step S13, it is determined that B image data obtained by imaging is to be acquired as the inspection image data.

Thereafter, when the substrate W is carried into the substrate inspection device 200, the imaging controller 281 controls the respective constituent elements (220, 240, 250, 260, 270) of the substrate inspection device 200 to emit illumination light to the substrate W (step S14).

Further, the image data generator 282 generates R image data, G image data and B image data based on the output from the imager 240 (step S15). Thereafter, the inspection image data acquirer 284 acquires the B image data as the inspection image data in accordance with the acquiring method determined by the substrate characteristic determiner 283 (step S16).

In the step S15, it has been already determined in the process of the step S13 that the image data required for acquisition of the inspection image data is the B image data. Therefore, only the B image data may be generated.

Next, the inspector 286 executes an inspection process based on an inspection condition stored in the inspection storage 285 and the inspection image data acquired by the inspection image data acquirer 284 (step S17). The inspection process in the step S17 corresponds to at least one of the first inspection, the second inspection and the third inspection, described above. After the step S17 ends, the imaging inspection process ends.

In a case in which the substrate Wto be inspected is not a B absorption substrate in the above-mentioned step S12, the substrate characteristic determiner 283 determines whether a substrate W to be inspected is a G absorption substrate (step S21).

In a case in which the substrate W to be inspected is a G absorption substrate in the step S21, the substrate characteristic determiner 283 determines a method of acquiring inspection image data based on the substrate characteristic information stored in the inspection storage 285 (step S22). In the step S22, it is determined that G image data obtained by imaging is to be acquired as inspection image data. Thereafter, the process of the steps S23 and S24 that are respectively the same as the above-mentioned steps S14 and S15 is executed. In the step S24, it has been already determined in the process of the step S22 that image data required for acquisition of the inspection image data is G image data. Therefore, only the G image data may be generated.

Next, the inspection image data acquirer 284 acquires the G image data as the inspection image data in accordance with the acquiring method determined by the substrate characteristic determiner 283 (step S25). Thereafter, the process proceeds to the step S16.

In a case in which the substrate Wto be inspected is not a G absorption substrate in the above-mentioned step S21, the substrate characteristic determiner 283 determines whether the substrate W to be inspected is an R absorption substrate (step S31).

In a case in which the substrate W to be inspected is an R absorption substrate in the step S31, the substrate characteristic determiner 283 determines a method of acquiring inspection image data based on substrate characteristic information stored in the inspection storage 285 (step S32). In the step S32, it is determined that R image data obtained by imaging is to be acquired as inspection image data. Thereafter, the process of the steps S33 and S34 that are respectively the same as the above-mentioned steps S14 and S15 is executed. In the step S34, it has been already determined in the process of the step S32 that image data required for acquisition of the inspection image data is R image data. Therefore, only the R image data may be generated.

Next, the inspection image data acquirer 284 acquires the R image data as the inspection image data in accordance with the acquiring method determined by the substrate characteristic determiner 283 (step S35). Thereafter, the process proceeds to the step S17.

In a case in which the substrate W to be inspected is not an R absorption substrate in the above-mentioned step S31, the substrate characteristic determiner 283 determines whether the substrate W to be inspected is an opaque substrate (step S41). Further, the substrate characteristic determiner 283 determines a method of acquiring inspection image data based on substrate characteristic information stored in the inspection storage 285 (step S42). In the step S42, it is determined that R image data, G image data and B image data obtained by imaging are to be respectively acquired as inspection image data pieces. Thereafter, the process of the steps S43 and S44 that are respectively the same as the above-mentioned steps S14 and S15 is executed.

Next, the inspection image data acquirer 284 acquires R image data, G image data and B image data as respective inspection image data pieces in accordance with the acquiring method determined by the substrate characteristic determiner 283 (step S45). Thereafter, the process proceeds to the step S17.

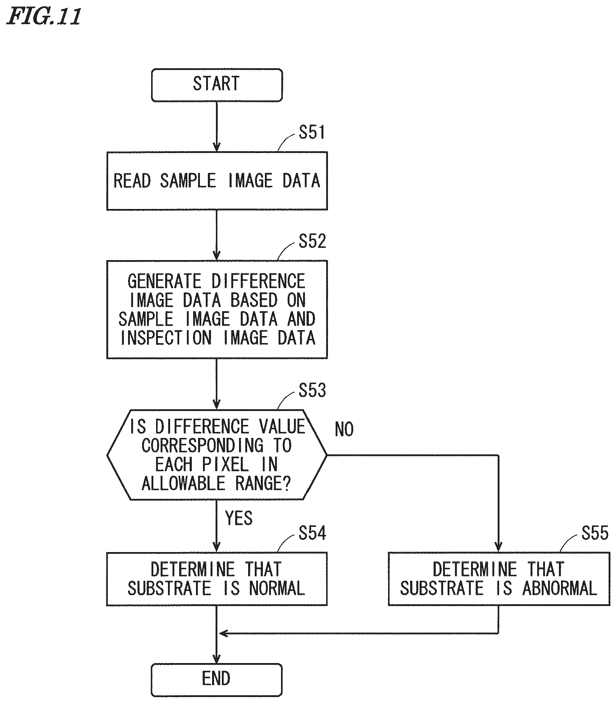

Fig. 11 is a flowchart showing one example of the inspection process of the step S16 of Fig. 9. Here, one example of the inspection process corresponding to the above-mentioned first inspection will be described. In the following description, suppose that sample image data corresponding to a substrate W to be inspected is stored as an inspection condition in the inspection storage 285 of Fig. 8 in an initial state.

As shown in Fig. 11, when the process corresponding to the first inspection is started, the inspector 286 reads sample image data from an inspection condition of the inspection storage 285 (step S51).

Next, the inspector 286 generates difference image data based on the read sample image data and inspection image data acquired in any one of the steps S16, S25, S35 and S45 in Figs. 9 and 10 (step S52).

Next, based on an inspection condition stored in the inspection storage 285, the inspector 286 determines whether the difference value corresponding to each pixel of the difference image data is in a predetermined allowable range (step S53). Then, the inspector 286 determines that the substrate Wto be inspected is normal in a case in which the difference value corresponding to each pixel of the difference image data is in the predetermined allowable range (step S54). On the other hand, the inspector 286 determines that the substrate W to be inspected is abnormal in a case in which the difference value corresponding to each pixel of the difference image data is not in the predetermined allowable range (step S55). After the process of the step S54 or the step S55, the inspection process ends.

### 7. Effects

(a) In the above-mentioned substrate inspection device 200, the upper surface of the substrate W is irradiated with illumination light formed of white light, and an image of the upper surface of the substrate W is captured by the imager 240. Based on an output of the imager 240, R image data, G image data and B image data are generated. Based on the R image data, the G image data and the B image data, inspection image data used for inspection for a substrate W is acquired.

The method of acquiring inspection image data is determined such that, in a case in which the substrate W to be inspected is a translucent substrate and absorbs light having a specific wavelength, image data corresponding to the light having a wavelength absorbed by the substrate W is acquired as the inspection image data. Specifically, in a case in which the substrate W to be inspected is a silicon carbide substrate, the B image data corresponding to blue light to be absorbed by the silicon carbide substrate is acquired as the inspection image data. Thus, the use of inspection image data including a peripheral member of the substrate W is prevented. As a result, the upper surface of the substrate W can be appropriately inspected according to the type of the substrate W.

(b) Further, the method of acquiring inspection image data is determined such that, in a case in which the substrate W to be inspected is an opaque substrate, all of the image data generated by imaging is acquired as inspection image data. Specifically, in a case in which the substrate W to be inspected is a silicon substrate, all of R image data, G image data and B image data generated by imaging are acquired as inspection image data pieces. Thus, in a case in which the substrate W is an opaque substrate, the upper surface of the substrate W can be inspected with a larger amount of inspection image data. This improves inspection accuracy.

(c) In the above-mentioned substrate inspection device 200, the substrate characteristic determiner 283 receives the input of a type of the substrate W, and determines whether the substrate W of the received type is a B absorption substrate, a G absorption substrate, an R absorption substrate or an opaque substrate. Further, the substrate characteristic determiner 283 determines a method of acquiring inspection image data based on a determination result. Therefore, the user does not need to perform complicated setting work in regard to the method of acquiring inspection image data.

(d) The above-mentioned imager 240 includes the first line sensor 241, the second line sensor 242 and the third line sensor 243. In each line sensor, a plurality of pixels are arranged in the first device direction D1. Therefore, it is possible to acquire inspection image data having a higher resolution by reducing the arrangement pitch of a plurality of pixels of each line sensor.

### 8. Substrate Processing Apparatus Including Substrate Inspection Device 200

Fig. 12 is a schematic block diagram showing one example of a substrate processing apparatus including the substrate inspection device 200 of Fig. 1. As shown in Fig. 12, the substrate processing apparatus 100 is provided to be adjacent to an exposure device 300, includes the substrate inspection device 200 and includes a control device 110, a transport device 120, a coater 130, a developer 140 and a thermal processor 150.

The control device 110 includes a CPU, a memory or a microcomputer, for example, and controls the work of the transport device 120, the coater 130, the developer 140 and the thermal processor 150. Further, the control device 110 also provides an instruction for inspecting the surface state of one surface of a substrate W (for executing the above-mentioned imaging inspection process) to the controller 280 (Fig. 1) of the substrate inspection device 200.

The transport device 120 transports the substrate W among the coater 130, the developer 140, the thermal processor 150, the substrate inspection device 200 and the exposure device 300. The coater 130 forms a resist film on one surface of an unprocessed substrate W (coating process). The exposure process is executed in the exposure device 300 on the substrate W after the coating process, with the substrate W having the resist film thereon. The developer 140 executes a development process on the substrate W by supplying a development liquid to the substrate W after the exposure process by the exposure device 300. The thermal processor 150 executes a thermal process on the substrate W before and after the coating process by the coater 130, the development process by the developer 140 and the exposure process by the exposure device 300.

The coater 130 may form an anti-reflection film on the substrate W. In this case, a processing unit for executing adhesion reinforcement process for improving adhesion between the substrate W and an anti-reflection film may be provided in the thermal processor 150. Further, the coater 130 may form a resist cover film for protecting a resist film formed on the substrate W on the substrate W.

The substrate inspection device 200 inspects the substrate W after the coating process by the coater 130 and before the exposure process by the exposure device 300. Alternatively, the substrate inspection device 200 inspects the substrate W after the coating process by the coater 130 and after the exposure process by the exposure device 300. Alternatively, the substrate inspection device 200 may inspect the substrate W after the coating process by the coater 130, after the exposure process by the exposure device 300, and after the development process by the developer 140.

In the above-mentioned substrate processing apparatus 100, the work conditions of respective constituent elements are set as processing recipes for each lot of a predetermined number of substrates W, for example. A processing recipe may include information representing a type of a substrate W to be processed, for example. In this case, the substrate characteristic determiner 283 of Fig. 8 of the substrate inspection device 200 may determine whether the substrate W to be inspected is a B absorption substrate, a G absorption substrate, an R absorption substrate or an opaque substrate by receiving the processing recipe from the control device 110 of Fig. 12.

### 9. Other Embodiments

(a) While the illuminator 220 according to the above-mentioned embodiment includes a white light source that generates white light, the present disclosure is not limited to this. Instead of a white light source, an illuminator 220 may include a red light source that generates red light, a green light source that generates green light and a blue light source that generates blue light. In this case, an imager 240 may include a monochrome imaging element.
   In this case, when acquiring only one of R image data, G image data and B image data as inspection image data, a substrate characteristic determiner 283 may control the illuminator 220 to selectively drive the light source of a color corresponding to the one image data as indicated by the dotted arrow in Fig. 8. With this control, unnecessary energy consumption in the illuminator 220 is suppressed.
(b) While the imager 240 according to the above-mentioned embodiment includes three line sensors (241 to 243), the present disclosure is not limited to this. An imager 240 may include a color imaging element in which a plurality of R pixels pa, a plurality of G pixels pb and a plurality of B pixels pc are arranged in a Bayer layout. Alternatively, the imager 240 may have the configuration including a monochrome imaging element and a color filter switching device that switches a wavelength of light incident on an imaging element. Alternatively, the imager 240 may include a plurality of monochrome imaging elements and a plurality of color filters respectively corresponding to the plurality of monochrome imaging elements.
(c) In the imaging inspection process according to the above-mentioned embodiment, the process of the steps S21 to S25 and S31 to S35 is executed on the assumption that a G absorption substrate and an R absorption substrate are present. However, in a case in which a substrate W corresponding to the G absorption substrate and the R absorption substrate is not present, the process of the steps S21 to S25 and S31 to S35 does not have to be executed.
(d) While the substrate holding device 250 moves with respect to the fixed illuminator 220, the fixed reflector 230 and the fixed imager 240 in order to capture an image of the entire upper surface of the substrate W in the substrate inspection device 200 according to the above-mentioned embodiment, the present disclosure is not limited to this.
   The illuminator 220, the reflector 230 and the imager 240 may be configured to be movable in the second device direction D2 with respect to the substrate holding device 250 while maintaining the positional relationship with one another. In this case, an image of the substrate W may be captured by movement of the illuminator 220, the reflector 230 and the imager 240 in the second device direction D2 with respect to the fixed substrate holding device 250.
(e) While inspection image data includes any of R image data, G image data and B image data representing an entire substrate W in the substrate inspection device 200 according to the above-mentioned embodiment, the present disclosure is not limited to this. The inspection image data may be generated so as to correspond to each of a plurality of portions of the substrate W.

For example, in a case in which the substrate W to be inspected is a translucent substrate, the rotation holder 252 included in the depth of focus of the imager 240 is likely to appear in an image obtained by imaging. However, in a case in which largely deviating from the depth of focus of the imager 240, a member located at a position spaced apart from the substrate W is unlikely to appear in an image obtained by imaging.

As such, in regard to a portion of the substrate W overlapping with the rotation holder 252 in plan view, image data corresponding to light to be absorbed by the substrate W (any one of R image data, G image data and B image data) is used as inspection image data. On the other hand, in regard to a portion of the substrate W deviating from the rotation holder 252 in plan view, R image data, G image data and B image data are set as inspection image data pieces.

Thus, it is possible to perform appropriate inspection with a suppressed reduction in accuracy on the upper-surface center area of the substrate W and perform more accurate and detailed inspection on the upper-surface outer area of the substrate W surrounding the upper-surface center area of the substrate W.

(f) In the substrate inspection device 200 according to the above-mentioned embodiment, in a case in which the substrate W to be inspected is a translucent substrate, one of R image data, G image data and B image data is acquired as inspection image data. However, the present disclosure is not limited to this. In a case in which the substrate W to be inspected is a translucent substrate, R image data, G image data, and B image data may be acquired as inspection image data pieces.

In this case, in order to suppress a reduction in inspection accuracy due to inclusion of the rotation holder 252, it is preferable that an inspection condition stored in the substrate characteristic determiner 283 is adjusted for each image data piece.

For example, in regard to inspection image data corresponding to the light to be absorbed by the substrate W, an inspection condition is adjusted to be strict. For example, in regard to inspection image data corresponding to the light not to be absorbed by the substrate W, an inspection condition is adjusted to be moderate. As a specific example, in regard to inspection image data corresponding to the wavelength of light to be absorbed by the substrate W, the "allowable range of each difference value of difference image data" used in the above-mentioned first inspection is set small. Further, in regard to inspection image data corresponding to light not to be absorbed by the substrate W, the "allowable range of each difference value of difference image data" used in the above-mentioned first inspection is set large.

In these cases, an inspection result based on the inspection image data corresponding to light to be absorbed by the substrate W can be treated as a highly reliable inspection result. Further, an inspection result based on the inspection image data corresponding to light not to be absorbed by the substrate W can be treated as a supplementary inspection result.

(g) In the substrate inspection device 200 according to the above-mentioned embodiment, in a case in which the substrate W to be inspected is a translucent substrate, one of R image data, G image data and B image data is acquired as inspection image data in the substrate inspection device 200 according to the above-mentioned embodiment. However, the present disclosure is not limited to this. In a case in which the substrate W to be inspected is a translucent substrate, image data obtained by combination of two or more image data pieces among R image data, G image data and B image data may be acquired as inspection image data.

In this case, as image data corresponding to light to be absorbed by the substrate W, in inspection image data, more components of image data corresponding to the wavelength of light to be absorbed by the substrate W than components of image data corresponding to the wavelength of light not to be absorbed by the substrate W are included. Thus, the component of image data corresponding to light to be absorbed by the substrate W is preferentially used for the inspection for the substrate W. Therefore, degradation in inspection accuracy due to inclusion of a peripheral member of the substrate W at the time of imaging for the substrate W is reduced.

### 10. Correspondences Between Constituent Elements in Claims and Parts in Preferred Embodiments

In the following paragraphs, non-limiting examples of correspondences between various elements recited in the claims below and those described above with respect to various preferred embodiments of the present disclosure are explained. As each of various elements recited in the claims, various other elements having configurations or functions described in the claims can be also used.

In the above-mentioned embodiment, the illuminator 220 is an example of an illuminator, the imager 240 is an example of an imager, the controller 280 and the inspection image data acquirer 284 are examples of a controller, the configuration of the substrate inspection device 200 excluding the inspector 286 is an example of a substrate imaging device, and the substrate holding device 250 is an example of a holder.

Further, the wavelength of one light to be absorbed by the substrate W among the wavelength of red light, the wavelength of green light and the wavelength of blue light is an example of a first wavelength, image data corresponding to the wavelength of the one light is an example of first data, the wavelength of remaining light not to be absorbed by the substrate among the wavelength of red light, the wavelength of green light and the wavelength of blue light is an example of a second wavelength, and pixel data corresponding to the wavelength of remaining light is an example of second data.

The work mode of the controller 280 during the process of the steps S14 to S16, the steps S23 to S25, and the steps S33 to S35 of Figs. 9 and 10 is an example of a first mode, the work mode of the controller 280 during the process of the steps S43 to S45 of Fig. 10 is an example of a second mode, the substrate characteristic determiner 283 is an example of a substrate characteristic determiner, the first device direction D1 is an example of a first direction, the second device direction D2 is an example of a second direction, the mover 260 is an example of a mover, the inspector 286 is an example of an inspector, and the substrate inspection device 200 and the substrate processing apparatus 100 are examples of a substrate processing apparatus.

### 11. Overview of Embodiments

(Item 1) A substrate imaging device according to item 1 includes an illuminator that emits illumination light to an upper surface of a substrate, an imager that captures an image of the upper surface of the substrate irradiated with the illumination light, and a controller that acquires inspection image data representing a state of at least a partial area of the upper surface of the substrate based on an output of the imager, wherein the inspection image data corresponds to light having an absorption wavelength of the substrate.

In the substrate imaging device, the upper surface of the substrate is irradiated with illumination light, and an image of the upper surface of the substrate is captured by the imager. The inspection image data is acquired based on an output of the imager.

Depending on the type of the substrate to be inspected, part of illumination light may be reflected from the upper surface of the substrate and be incident on the imager, and the remaining part of the illumination light may be transmitted through the substrate. In this case, the illumination light that has been transmitted through the substrate may be reflected from the surface of the peripheral member of the substrate located below the substrate, and may be incident on the imager through the substrate again. Therefore, the image data generated based on the output of the imager may represent the peripheral member together with the upper surface of the substrate. With such image data, the state of the upper surface of the substrate cannot be accurately identified.

When the remaining portion of the illumination light is absorbed by the substrate when the illumination light is transmitted through the substrate, an amount of light reflected by the peripheral member and incident on the imager is reduced. Thus, image data representing the upper surface of the substrate and not representing the peripheral member can be obtained.

Therefore, in the above-mentioned substrate imaging device, the inspection image data representing a state of at least a partial area of the upper surface of the substrate corresponds to light having a substrate absorption wavelength. The substrate absorption wavelength is a wavelength of light that can be absorbed by the substrate. As a result, it is possible to perform an appropriate inspection on the upper surface of the substrate in accordance with the type of the substrate.

(Item 2) The substrate imaging device according to item 1, may further includes a holder that holds a lower surface of the substrate by suction, wherein the illumination light may include light having the absorption wavelength of the substrate, the illuminator may irradiate the upper surface of the substrate held by the holder with the illumination light, the imager may capture an image of the upper surface of the substrate held by the holder, and the at least a partial area of the upper surface of the substrate may include an area overlapping with the holder in plan view.

In this case, with the substrate held by the holder, the holder comes into contact with the lower surface of the substrate. At this time, although the holder is spaced apart from the upper surface of the substrate by the thickness of the substrate, the thickness of the substrate is relatively small. That is, the distance between the upper surface of the substrate and the holder is relatively small. Therefore, the holder is likely to be located in the range of the depth of focus of the imager. Therefore, when an image of the substrate is captured with light that is transmitted through the substrate and is not to be absorbed by the substrate, the holder is included in the image of the substrate obtained by imaging.

In contrast, in the above-mentioned configuration, the illumination light includes light having the substrate absorption wavelength. Further, the inspection image data corresponds to light having the substrate absorption wavelength. Further, at least part of the upper surface of the substrate includes an area overlapping with the holder in plan view. This suppresses inclusion of an image of the holder in the image represented by the inspection image data. That is, it prevents acquisition of the inspection image data including the holder.

(Item 3) The substrate imaging device according to item 2, wherein the illuminator may be configured to be capable of simultaneously or selectively irradiating the upper surface of the substrate with light having a first wavelength and light having a second wavelength as the illumination light, the imager may be configured to be capable of generating first data corresponding to the light having the first wavelength by capturing an image of the substrate irradiated with the light having the first wavelength, and generating second data corresponding to the light having the second wavelength by capturing an image of the substrate irradiated with the light having the second wavelength, and the controller, in a case in which the substrate transmits the illumination light and easily absorbs the light having the first wavelength as compared with the light having the second wavelength, may work in a first mode in which the controller, by controlling the illuminator and the imager, causes the upper surface of the substrate to be irradiated with at least the light having the first wavelength out of the light having the first wavelength and the light having the second wavelength and generates image data including more components of the first data than components of the second data as the inspection image data.

With the above-mentioned configuration, the upper surface of the substrate is irradiated with light having the first wavelength as illumination light, for example. In this case, the first data corresponding to the light having the first wavelength is generated. Further, the upper surface of the substrate is irradiated with the light having the second wavelength as illumination light, for example. In this case, the second data corresponding to the light having the second wavelength is generated.

In a case in which the substrate transmits the illumination light and more easily absorbs the light having the first wavelength than the light having the second wavelength, image data including more components of the first data than components of the second data is acquired as inspection image data. As a result, it is possible to perform an appropriate inspection on the upper surface of the substrate in accordance with the type of the substrate.

(Item 4) The substrate imaging device according to item 3, wherein the controller, while working in the first mode, may generate image data made of the first data as the inspection image data.

In this case, in a case in which the substrate transmits the illumination light and more easily absorbs the light having the first wavelength than the light having the second wavelength, the image data generated based on the first data is used as inspection image data. Therefore, it is possible to perform inspection according to a type of the substrate in a simple process.

(Item 5) The substrate imaging device according to item 3 or 4, wherein the controller, in a case in which the upper surface of the substrate does not transmit the light having the first wavelength and the light having the second wavelength, may work in a second mode in which the controller, by controlling the illuminator and the imager, causes the upper surface of the substrate to be irradiated with the light having the first wavelength and the light having the second wavelength as the illumination light and generates image data made of the first data and image data made of the second data as the inspection image data.

In a case in which the upper surface of the substrate does not transmit illumination light, a large part of the illumination light is reflected and incident on the imager. Thus, image data accurately representing the state of the upper surface of the substrate is generated. The state of the upper surface of the substrate may be shown differently depending on the wavelength of the illumination light. In the above-mentioned substrate imaging device, the light having the first wavelength and the light having the second wavelength can be used as illumination light. Further, the image data corresponding to the light having the first wavelength and the image data corresponding to the light having the second wavelength are generated as inspection image data pieces.

Therefore, by using the image data corresponding to the light having the first wavelength and the image data corresponding to the light having the second wavelength, it is possible to perform more accurate and detailed inspection in regard to the state of the upper surface of the substrate.

(Item 6) The substrate imaging device according to item 5, may further include a substrate characteristic determiner that determines whether the substrate transmits the illumination light and more easily absorbs the light having the first wavelength as compared with the light having the second wavelength or whether the substrate does not transmit the light having the first wavelength or the light having the second wavelength, wherein the controller, in a case in which the substrate transmits the illumination light and more easily absorbs the light having the first wavelength as compared with the light having the second wavelength, may work in the first mode, and in a case in which the substrate does not transmit the light having the first wavelength or the light having the second wavelength, may work in the second mode.

In this case, the mode of the controller is determined based on a determination result in regard to the characteristics of the substrate. Therefore, the user does not need to perform complicated setting work in order to determine the mode of the controller.

(Item 7) The substrate imaging device according to item 6, wherein the first wavelength may be a wavelength of blue light, the second wavelength may be a wavelength of red or green light, and the substrate characteristic determiner, in a case in which the substrate is made of silicon carbide, may determine that the substrate transmits the illumination light and more easily absorbs the light having the first wavelength as compared with the light having the second wavelength, and in a case in which the substrate is made of silicon, may determine that the substrate does not transmit the light having the first wavelength or the light having the second wavelength.

The substrate made of silicon carbide is an orange translucent substrate and transmits light having wavelengths of red, green and blue. Further, the substrate made of silicon carbide is orange and is more likely to absorb light having a wavelength of blue than light having a wavelength of red and light having a wavelength of green. With the above-mentioned configuration, in a case in which the substrate is made of silicon carbide, image data including more components of the first data corresponding to blue than components of the second data corresponding to red or green is acquired as inspection image data.

The substrate made of silicon is an opaque substrate having a mirror-like outer surface and does not transmit light having wavelengths for red light, green light and blue light. With the above-mentioned configuration, in a case in which the substrate is made of silicon, image data including the first data corresponding to blue is acquired as inspection image data. Further, image data including second data corresponding to red or green is acquired as inspection image data.

(Item 8) The substrate imaging device according to any one of items 2 to 7, wherein the imager may include a first line sensor that is capable of outputting, as the first data, a signal indicating an amount of received light having the first wavelength by receiving the light having the first wavelength, and is provided to extend in parallel to a first direction, and a second line sensor that is capable of outputting, as the second data, a signal indicating an amount of received light having the second wavelength by receiving the light having the second wavelength, and is provided to extend in parallel to the first direction, and the substrate imaging device may further include a mover that moves at least one of the holder and the imager such that the substrate held by the holder moves, with respect to the imager, in a second direction that is parallel to the upper surface of the substrate and intersects with the first direction.

In this case, at least one of the holder and the imager is moved in the second direction, so that the image data corresponding to the first wavelength is generated based on an output of the first line sensor. Further, the image data corresponding to the second wavelength is generated based on an output of the second line sensor.

In the first line sensor, a plurality of pixels (light receiving elements) that receive light having the first wavelength are arranged in parallel to the first direction. Further, in the second line sensor, a plurality of pixels (light receiving elements) that receive light having the second wavelength are arranged in parallel to the first direction. Therefore, the arrangement pitch of the plurality of pixels of each line sensor is reduced in the direction parallel to the first direction, so that inspection image data having a higher resolution can be acquired.

(Item 9) A substrate processing apparatus according to item 9 includes the substrate imaging device according to any one of items 1 to 8, and an inspector that inspects a state of an upper surface of a substrate based on inspection image data acquired by the substrate imaging device.

The substrate inspection device includes the above-mentioned substrate imaging device. Thus, it is possible to perform an appropriate inspection on the upper surface of the substrate in accordance with the type of the substrate.

(Item 10) A substrate imaging method according to item 10 includes irradiating an upper surface of a substrate with illumination light, capturing, using an imager, an image of the upper surface of the substrate irradiated with the illumination light, and based on an output of the imager, acquiring inspection image data representing a state of at least a partial area of the upper surface of the substrate, wherein the inspection image data corresponds to light having an absorption wavelength of the substrate.

With the substrate imaging method, the upper surface of the substrate is irradiated with illumination light, and an image of the upper surface of the substrate is captured by the imager. The inspection image data is acquired based on an output of the imager.

Depending on the type of the substrate to be inspected, part of illumination light may be reflected from the upper surface of the substrate and be incident on the imager, and the remaining part of the illumination light may be transmitted through the substrate. In this case, the illumination light that has been transmitted through the substrate may be reflected from the surface of the peripheral member of the substrate located below the substrate, and may be incident on the imager through the substrate again. Therefore, the image data generated based on the output of the imager may represent the peripheral member together with the upper surface of the substrate. With such image data, the state of the upper surface of the substrate cannot be accurately identified.

When the remaining portion of the illumination light is absorbed by the substrate when the illumination light is transmitted through the substrate, an amount of light reflected from the peripheral member and incident on the imager is reduced. Thus, the image data representing the upper surface of the substrate and not representing the peripheral member can be obtained.

As such, with the above-mentioned substrate imaging method, the inspection image data representing the state of at least a partial area of the upper surface of the substrate corresponds to the light having a substrate absorption wavelength. The substrate absorption wavelength is a wavelength of light that can be absorbed by the substrate. As a result, it is possible to perform an appropriate inspection on the upper surface of the substrate in accordance with the type of the substrate.

(Item 11) A substrate processing method according to item 11 includes the substrate imaging method according to item 10, and inspecting a state of an upper surface of a substrate based on inspection image data acquired by the substrate imaging method.

The substrate inspection method includes the above-mentioned substrate imaging method. Thus, it is possible to perform an appropriate inspection on the upper surface of the substrate in accordance with the type of the substrate.

While preferred embodiments of the present disclosure have been described above, it is to be understood that variations and modifications will be apparent to those skilled in the art without departing the scope and spirit of the present disclosure. The scope of the present disclosure, therefore, is to be determined solely by the following claims.

## Claims

1. A substrate imaging device comprising:
an illuminator that emits illumination light to an upper surface of a substrate;
an imager that captures an image of the upper surface of the substrate irradiated with the illumination light; and
a controller that acquires inspection image data representing a state of at least a partial area of the upper surface of the substrate based on an output of the imager, wherein
the inspection image data corresponds to light having an absorption wavelength of the substrate.

2. The substrate imaging device according to claim 1, further comprising a holder that holds a lower surface of the substrate by suction, wherein
the illumination light includes light having the absorption wavelength of the substrate,
the illuminator irradiates the upper surface of the substrate held by the holder with the illumination light,
the imager captures an image of the upper surface of the substrate held by the holder, and
the at least a partial area of the upper surface of the substrate includes an area overlapping with the holder in plan view.

3. The substrate imaging device according to claim 2, wherein
the illuminator is configured to be capable of simultaneously or selectively irradiating the upper surface of the substrate with light having a first wavelength and light having a second wavelength as the illumination light,
the imager is configured to be capable of generating first data corresponding to the light having the first wavelength by capturing an image of the substrate irradiated with the light having the first wavelength, and generating second data corresponding to the light having the second wavelength by capturing an image of the substrate irradiated with the light having the second wavelength, and
the controller, in a case in which the substrate transmits the illumination light and easily absorbs the light having the first wavelength as compared with the light having the second wavelength, works in a first mode in which the controller, by controlling the illuminator and the imager, causes the upper surface of the substrate to be irradiated with at least the light having the first wavelength out of the light having the first wavelength and the light having the second wavelength and generates image data including more components of the first data than components of the second data as the inspection image data.

4. The substrate imaging device according to claim 3, wherein
the controller, while working in the first mode, generates image data made of the first data as the inspection image data.

5. The substrate imaging device according to claim 3 or 4, wherein
the controller, in a case in which the upper surface of the substrate does not transmit the light having the first wavelength and the light having the second wavelength, works in a second mode in which the controller, by controlling the illuminator and the imager, causes the upper surface of the substrate to be irradiated with the light having the first wavelength and the light having the second wavelength as the illumination light and generates image data made of the first data and image data made of the second data as the inspection image data.

6. The substrate imaging device according to claim 5, further comprising a substrate characteristic determiner that determines whether the substrate transmits the illumination light and more easily absorbs the light having the first wavelength as compared with the light having the second wavelength or whether the substrate does not transmit the light having the first wavelength or the light having the second wavelength, wherein
the controller,
in a case in which the substrate transmits the illumination light and more easily absorbs the light having the first wavelength as compared with the light having the second wavelength, works in the first mode, and
in a case in which the substrate does not transmit the light having the first wavelength or the light having the second wavelength, works in the second mode.

7. The substrate imaging device according to claim 6, wherein
the first wavelength is a wavelength of blue light,
the second wavelength is a wavelength of red or green light, and
the substrate characteristic determiner,
in a case in which the substrate is made of silicon carbide, determines that the substrate transmits the illumination light and more easily absorbs the light having the first wavelength as compared with the light having the second wavelength, and
in a case in which the substrate is made of silicon, determines that the substrate does not transmit the light having the first wavelength or the light having the second wavelength.

8. The substrate imaging device according to any one of claims 2 to 7, wherein
the imager includes
a first line sensor that is capable of outputting, as the first data, a signal indicating an amount of received light having the first wavelength by receiving the light having the first wavelength, and is provided to extend in parallel to a first direction, and
a second line sensor that is capable of outputting, as the second data, a signal indicating an amount of received light having the second wavelength by receiving the light having the second wavelength, and is provided to extend in parallel to the first direction, and
the substrate imaging device further includes
a mover that moves at least one of the holder and the imager such that the substrate held by the holder moves, with respect to the imager, in a second direction that is parallel to the upper surface of the substrate and intersects with the first direction.

9. A substrate processing apparatus comprising:
the substrate imaging device according to any one of claims 1 to 8; and
an inspector that inspects a state of an upper surface of a substrate based on inspection image data acquired by the substrate imaging device.

10. A substrate imaging method including:
irradiating an upper surface of a substrate with illumination light;
capturing, using an imager, an image of the upper surface of the substrate irradiated with the illumination light; and
based on an output of the imager, acquiring inspection image data representing a state of at least a partial area of the upper surface of the substrate, wherein
the inspection image data corresponds to light having an absorption wavelength of the substrate.

11. A substrate processing method including;
the substrate imaging method according to claim 10; and
inspecting a state of an upper surface of a substrate based on inspection image data acquired by the substrate imaging method.
